(19) Europäisches Patentamt
European Patent Office
Office européen des brevets

(11) **EP 4 641 291 A1**

(12) **EUROPEAN PATENT APPLICATION**
published in accordance with Art. 153(4) EPC

(43) Date of publication:
29.10.2025 Bulletin 2025/44

(51) International Patent Classification (IPC):
*G02F 1/133* (2006.01)   *G02B 3/14* (2006.01)

(21) Application number: 24916516.8

(22) Date of filing: 22.10.2024

(86) International application number:
PCT/CN2024/126308

(87) International publication number:
WO 2025/148465 (17.07.2025 Gazette 2025/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.01.2024 CN 202410025925

(71) Applicant: Nanchang Virtual Reality Research
Institute
Co., Ltd.
Nanchang, Jiangxi 330013 (CN)

(72) Inventors:
• HUO, Yingdong
  Nanchang, Jiangxi 330013 (CN)
• PENG, Zhigang
  Nanchang, Jiangxi 330013 (CN)

(74) Representative: Metida
Gyneju str. 16
01109 Vilnius (LT)

(54) **VARIABLE-FOCUS LIQUID CRYSTAL LENS**

(57) This application provides a variable-focus liquid crystal lens including an upper substrate, a lower substrate, and a liquid crystal material, where the liquid crystal material is disposed between the upper substrate and the lower substrate. The lower substrate internally includes a first electrode region, where the first electrode region includes a plurality of annular electrodes with unequal spacings and unequal line widths arranged sequentially from the inside to the outside. A voltage divider circuit is disposed on the periphery of the lower substrate. an annular trace is respectively connected to the plurality of annular electrodes through different connection lines, a plurality of spaced connection points are formed at junctions between each of the connection lines and the annular trace, annular trace winding regions are disposed between every two adjacent connection points, distances between every two adjacent connection points are equal, and resistances between every two adjacent connection points are equal.

FIG. 1

**Description**

**TECHNICAL FIELD**

This application pertains to the field of lens technologies, and in particular, to a variable-focus liquid crystal lens.

**BACKGROUND**

Typically, to achieve an ideal optical path difference distribution for a liquid crystal zoom lens, discrete multi-electrode designs, high-resistance film designs, or spiral or concentric circle designs with equal line width and equal line spacing are required. The discrete multi-electrode approach necessitates complex external drive circuits, involves a large number of electrodes, and requires precise individual control of the voltage for each electrode, resulting in complex circuitry and significant debugging challenges. The high-resistance film design method requires the production of a high-resistance film with good uniformity and stability, an issue that remains unresolved. The spiral or concentric circle design with equal line width and equal line spacing requires the entire lens area to adopt the same electrode sampling rate, whereas the central region of the lens does not need the same high sampling rate as the outer ring region, leading to image quality degradation in the central region due to oversampling and diffraction effects.

**SUMMARY**

To address or mitigate the issues in the prior art related to achieving an ideal optical path difference distribution for a lens, the embodiments of this application provide a variable-focus liquid crystal lens, including an upper substrate, a lower substrate, and a liquid crystal material, where the liquid crystal material is disposed between the upper substrate and the lower substrate;

the lower substrate internally includes a first electrode region, where the first electrode region includes a plurality of annular electrodes with unequal spacings and unequal line widths arranged sequentially from the inside to the outside;

a voltage divider circuit is disposed on the periphery of the lower substrate, where the voltage divider circuit includes connection lines and an annular trace, the annular trace is disposed around the periphery of the lower substrate, the annular trace is separately connected to the plurality of annular electrodes through different connection lines, the connection lines are arranged in a one-to-one correspondence with the annular electrodes, a plurality of spaced connection points are formed at junctions between each of the connection lines and the annular trace, annular trace winding regions are disposed between every two adjacent connection points, distances between every two adjacent connection points are equal, and resistances between every two adjacent connection points are equal; and

the annular trace includes an initial end and a terminal end, and adjusting a voltage of the initial end and a voltage of the terminal end of the annular trace and controlling the liquid crystal material to operate in a linear region of a voltage-optical path difference curve results in an equally stepped optical path difference distribution.

In a preferred embodiment of this application, a width m of each of the annular electrodes is calculated as follows: $m = R_n - R_{n-1}$, where $R_n$ is a radius of the n-th annular electrode, $R_{n-1}$ is a radius of the (n-1)-th annular electrode, and n is a natural number greater than or equal to 2;

$$R_n = R_1 \times \sqrt{n};$$

and

$$R_1 = \sqrt{2\lambda f / fs},$$

where $f$ is the focal length of the variable-focus liquid crystal lens, $fs$ is the number of annular electrodes contained within an optical path difference per $\lambda$ wavelength, and $\lambda$ is a wavelength of an incident light.

In a preferred embodiment of this application, the first electrode region includes a first sub-annular electrode and a second sub-annular electrode, and the voltage divider circuit includes a first sub-voltage divider circuit and a second sub-voltage divider circuit; where

the first sub-voltage divider circuit includes a first sub-annular trace and first sub-connection lines, and the second sub-voltage divider circuit includes a second sub-annular trace and second sub-connection lines;

the first sub-annular trace is electrically connected to a plurality of first sub-annular electrodes through different first sub-connection lines, where the first sub-connection lines are arranged in a one-to-one correspondence with the first sub-annular electrodes; and

the second sub-annular trace is electrically connected to a plurality of second sub-annular electrodes through different second sub-connection lines, where the second sub-connection lines are arranged in a one-to-one correspondence with the second sub-annular electrodes.

In a preferred embodiment of this application, the first sub-annular trace is disposed on a side close to the first electrode region, and the second sub-annular trace is disposed on a side away from the first electrode region.

In a preferred embodiment of this application, the connection points include first sub-connection points and second sub-connection points; where

a plurality of spaced first sub-connection points are formed at junctions between each of the first sub-connection lines and the first sub-annular trace, and a plurality of spaced second sub-connection points are formed at junctions between each of the second sub-connection lines and the second sub-annular trace.

In a preferred embodiment of this application, the annular trace winding regions include first sub-annular trace winding regions and second sub-annular trace winding regions; where

the first sub-annular trace winding regions are disposed between every two adjacent first sub-connection points, and the second sub-annular trace winding regions are disposed between every two adjacent second sub-connection points.

In a preferred embodiment of this application, a plurality of second electrode regions are sequentially disposed from the inside to the outside around the periphery of the first electrode region; where

each of the second electrode regions includes a plurality of the annular electrodes, wherein the quantity of electrodes in every region is equal, an N-th annular electrode in the first electrode region and N-th annular electrodes in the plurality of second electrode regions are all connected to the same connection line, and N is a natural number.

In a preferred embodiment of this application, the first sub-annular trace and the second sub-annular trace are disposed around the periphery of the plurality of second electrode regions.

In a preferred embodiment of this application, each of the second electrode regions includes a third sub-annular electrode and a fourth sub-annular electrode; where

the first sub-annular trace is connected to the third sub-annular electrodes of the plurality of second electrode regions through different first sub-connection lines, and the second sub-annular trace is connected to the fourth sub-annular electrodes of the plurality of second electrode regions through different second sub-connection lines.

Compared with the prior art, the embodiments of this application provide a variable-focus liquid crystal lens. This application designs a voltage divider circuit on the periphery of a lower substrate of the liquid crystal lens, where distances between every two adjacent connection points are equal, and resistances between every two adjacent connection points are equal. A annular trace includes an initial end and a terminal end, and adjusting a voltage of the initial end and a voltage of the terminal end of the annular trace and controlling the liquid crystal material to operate in a linear region of a voltage-optical path difference curve results in an equally stepped optical path difference distribution. Additionally, disposing an annular trace winding region between every two adjacent connection points can reduce voltage errors caused by length deviations between the connection points.

## BRIEF DESCRIPTION OF DRAWINGS

The accompanying drawings described herein are provided to offer a further understanding of this application and constitute a part of this application. The illustrative embodiments of this application and their descriptions are used to explain this application and do not constitute an undue limitation of this application. Some specific embodiments of this application will be described in detail hereinafter in an exemplary but non-limiting manner with reference to the accompanying drawings. Identical reference signs in the accompanying drawings denote identical or similar components or parts, and those skilled in the art should understand that these drawings are not necessarily drawn to scale. In the accompanying drawings:

FIG. 1 is a schematic structural diagram of a lower substrate of a variable-focus liquid crystal lens according to an embodiment of this application;

FIG. 2 is a schematic diagram illustrating equally stepped variation of voltage signals of a plurality of annular electrodes according to an embodiment of this application;

FIG. 3 is a schematic diagram illustrating a liquid crystal material operating in a linear region of a voltage-optical path difference curve according to an embodiment of this application;

FIG. 4 is a schematic diagram illustrating equally stepped variation of an optical path difference of a plurality of annular electrodes according to an embodiment of this application;

FIG. 5 is a schematic diagram illustrating an ideal optical path difference distribution of a variable-focus liquid crystal lens according to an embodiment of this application;

FIG. 6 is a partial enlarged view of the annular trace according to an embodiment of this application; and

FIG. 7 is a schematic structural diagram of a lower substrate of a variable-focus liquid crystal lens after partitioning a plurality of annular electrodes according to an embodiment of this application.

## DESCRIPTION OF EMBODIMENTS

To enable those skilled in the art to better understand the solutions of this application, the technical solutions in the embodiments of this application will be described clearly below in conjunction with the accompanying drawings in the embodiments of this application. It is apparent that the described embodiments are only some of the embodiments of this application, rather than all embodiments. Based on the embodiments in this application, all other embodiments obtained by those of ordinary skill in the art without creative efforts shall fall within the scope of protection of this application.

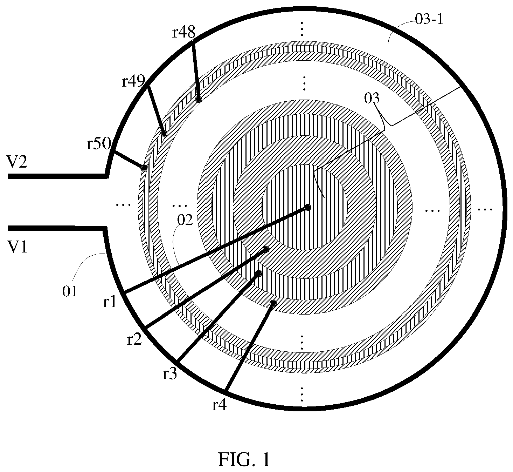

As shown in FIG. 1, an embodiment of this application provides a variable-focus liquid crystal lens including an upper substrate, a lower substrate, and a liquid crystal material, where the liquid crystal material is disposed between the upper substrate and the lower substrate.

The lower substrate internally includes a first electrode region 03, where the first electrode region 03 includes a plurality of annular electrodes 03-1 with unequal spacings and unequal line widths arranged sequentially from the inside to the outside. A voltage divider circuit is disposed on the periphery of the lower substrate, where the voltage divider circuit includes connection lines 02 and an annular trace 01, the annular trace 01 is disposed around the periphery of the lower substrate, each of the annular electrodes 03-1 is electrically connected to the annular trace 01 through the connection line 02, the connection lines 02 are arranged in a one-to-one correspondence with the annular electrodes 03-1, a plurality of spaced connection points are formed at junctions between each of the connection lines 02 and the annular trace 01, annular trace winding regions are disposed between every two adjacent connection points, distances between every two adjacent connection points are equal, and resistances between every two adjacent connection points are equal.

The annular trace 01 includes an initial end and a terminal end, and adjusting a voltage of the initial end and a voltage of the terminal end of the annular trace 01 and controlling the liquid crystal material to operate in a linear region of a voltage-optical path difference curve results in an equally stepped optical path difference distribution.

In the embodiments of this application, to address the issues in the prior art related to achieving an ideal optical path difference distribution for a variable-focus liquid crystal lens, the embodiments of this application primarily improve the lower substrate of the variable-focus liquid crystal lens by disposing a voltage divider circuit on the periphery of the lower substrate, where annular trace winding regions are disposed between every two adjacent connection points, the distances between every two adjacent connection points are equal, and the resistances between every two adjacent connection points are equal; meanwhile, by controlling a voltage of the initial end and a voltage of the terminal end of the voltage divider circuit, the liquid crystal material in the variable-focus liquid crystal lens is made to operate in a linear region of a voltage-optical path difference, thereby resulting in an equally stepped optical path difference distribution.

The voltage divider circuit is disposed around the periphery of the outermost annular electrode, meaning that the voltage divider circuit surrounds the outermost annular electrode. In a specific embodiment, the annular electrodes 03-1 are prepared using indium tin oxide, and the connection lines 02 are prepared using metal or indium tin oxide.

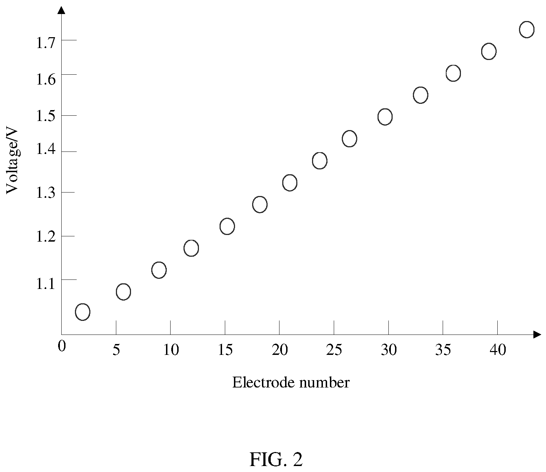

As shown in FIG. 2, taking the first electrode region 03 including 50 annular electrodes as an example, the voltage V1 of the initial end of the voltage divider circuit is 1.22 V and the voltage V2 of the terminal end is 2.05 V. Starting from the initial end of the voltage divider circuit, 50 connection points r1, r2, r3, r4, ..., r50 are designed at equal intervals, with equal resistance between every two adjacent connection points. These connection points are connected to the 50 annular electrodes through different connection lines 02, forming a voltage signal with equally stepped variations as shown in FIG. 2.

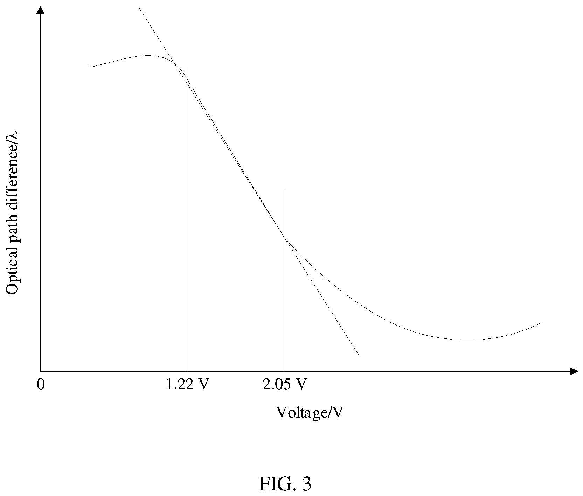

As shown in FIG. 3, when the voltage V1 of the initial end and the voltage V2 of the terminal end of the voltage divider circuit are in the range of 1.22 V to 2.05 V, the liquid crystal material in the lower substrate of the variable-focus liquid crystal lens operates in a linear region of a voltage-optical path difference.

A width m of each of the annular electrodes is calculated as follows:

$m = R_n - R_{n-1}$, where $R_n$ is a radius of the n-th annular electrode, $R_{n-1}$ is a radius of the (n-1)-th annular electrode, and n is a natural number greater than or equal to 2;

$$R_n = R_1 \times \sqrt{n};$$

and

$$R_1 = \sqrt{2\lambda f / fs},$$

where $f$ is a focal length of the variable-focus liquid crystal lens, $fs$ is the number of annular electrodes contained within an optical path difference per $\lambda$ wavelength, and $\lambda$ is a wavelength of an incident light. Specifically, taking $fs = 10$ as an example, the radius of each of the annular electrodes is calculated as follows;

$$R_2 = R_1 \times \sqrt{2};$$

$$\ldots$$

$$R_n = R_1 \times \sqrt{n};$$

and

$R_2 - R_1, \ldots, R_n - R_{n-1}$ represent the widths of the 2nd, ..., n-th annular electrodes, respectively.

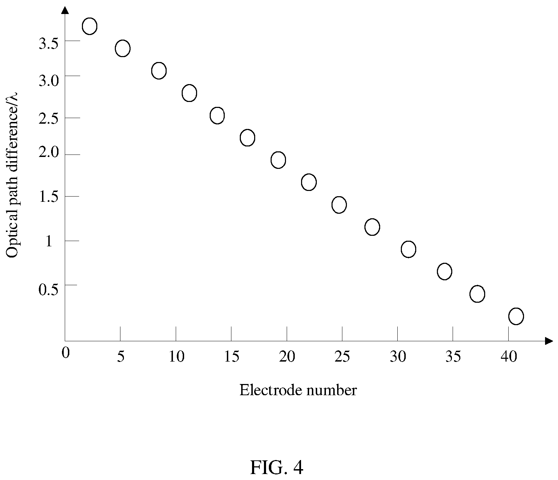

As shown in FIG. 4, since the liquid crystal material in the lower substrate of the variable-focus liquid crystal lens operates in the linear region of the voltage-optical path difference, optical path differences corresponding to the 50 annular electrodes also exhibit an equally stepped distribution.

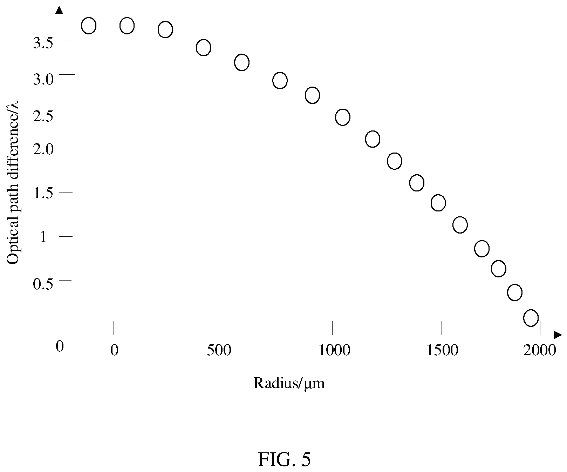

As shown in FIG. 5, since the plurality of annular electrodes are arranged with unequal spacings and unequal line widths, the optical path difference distribution of the variable-focus liquid crystal lens exhibits a parabolic distribution typical of an ideal lens.

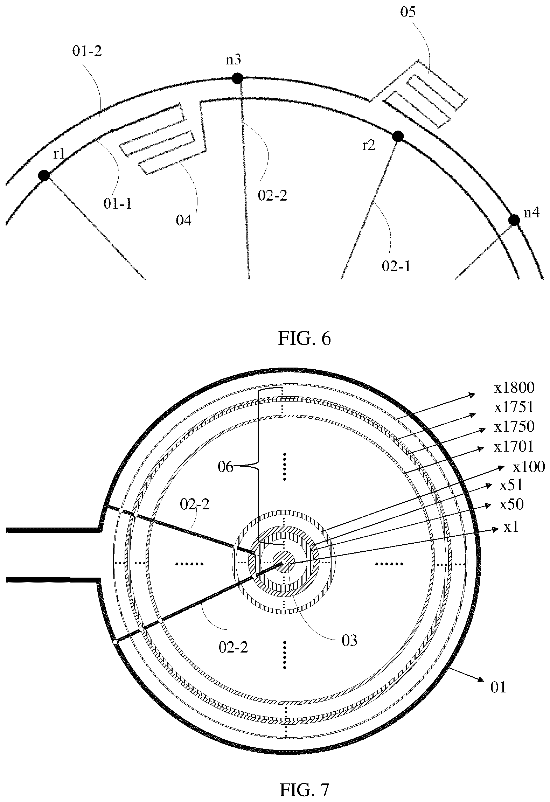

As shown in FIG. 6, in a preferred embodiment of this application, the first electrode region 03 includes first sub-annular electrodes and second sub-annular electrodes, and the voltage divider circuit includes a first sub-voltage divider circuit and a second sub-voltage divider circuit.

The first sub-voltage divider circuit includes a first sub-annular trace 01-1 and first sub-connection lines 02-1, and the second sub-voltage divider circuit includes a second sub-annular trace 01-2 and second sub-connection lines 02-2.

The first sub-annular trace 01-1 is electrically connected to a plurality of first sub-annular electrodes through different first sub-connection lines 02-1, where the first sub-connection lines 02-1 are arranged in a one-to-one correspondence with the first sub-annular electrodes.

The second sub-annular trace 01-2 is electrically connected to a plurality of second sub-annular electrodes through different second sub-connection lines 02-2, where the second sub-connection lines 02-2 are arranged in a one-to-one correspondence with the second sub-annular electrodes.

Preferably, the first sub-annular electrodes and the second sub-annular electrodes are alternately distributed.

In a preferred embodiment of this application, the first sub-annular trace 01-1 is disposed on a side close to the annular electrodes, and the second sub-annular trace 01-2 is disposed on a side away from the annular electrodes.

In a preferred embodiment of this application, the connection points include first sub-connection points and second sub-connection points.

A plurality of spaced first sub-connection points are formed at junctions between each of the first sub-connection lines 02-1 and the first sub-annular trace 01-1, and a plurality of spaced second sub-connection points are formed at junctions between each the second sub-connection lines 02-2 and the second sub-annular trace 01-2.

In a preferred embodiment of this application, the annular trace winding regions include first sub-annular trace winding regions 04 and second sub-annular trace winding regions 05.

As shown in FIG. 6, the first sub-annular trace winding regions 04 are disposed between every two adjacent first sub-connection points r1 and r2, and the second sub-annular trace winding regions 05 are disposed between every two adjacent second sub-connection points n3 and n4.

Through the above embodiments of this application, although theoretically, a trace length of the peripheral voltage divider circuit does not affect the equally stepped voltage distribution corresponding to the connection lines drawn from it, to reduce voltage errors caused by length deviations between the connection points, the trace length is increased by disposing annular trace winding regions between the connection points to address the issue of voltage deviation.

As shown in FIG. 7, when a shorter focal length and a larger diameter are required for the variable-focus liquid crystal lens, a segmented Fresnel lens approach can be adopted, with a plurality of electrode regions disposed on the lower substrate of the variable-focus liquid crystal lens.

In a preferred embodiment of this application, a plurality of second electrode regions 06 are sequentially disposed from the inside to the outside around the periphery of the first electrode region 03.

Each of the second electrode regions 06 includes a plurality of the annular electrodes, where the quantity of electrodes in every region is equal, an N-th annular electrode in the first electrode region and N-th annular electrodes in the plurality of second electrode regions are all connected to the same connection line, and N is a natural number.

In a preferred embodiment of this application, the first sub-annular trace 01-1 and the second sub-annular trace 01-2 are disposed around the periphery of the plurality of second electrode regions 06.

In a preferred embodiment of this application, each of the second electrode regions 06 includes a third sub-annular electrode and a fourth sub-annular electrode.

The first sub-annular trace 01-1 is connected to the third sub-annular electrodes of each second electrode region 06 through different first sub-connection lines, and the second sub-annular trace 01-2 is connected to the fourth sub-annular electrodes of each second electrode region 06 through different second sub-connection lines.

As shown in FIG. 7, the variable-focus liquid crystal lens according to the embodiments of this application includes 36 electrode regions, each of the electrode regions including 50 annular electrodes, where the first electrode region 03 includes one electrode region, and the second electrode regions 06 include 35 electrode regions. For example, the first electrode region 03 includes the 1st annular electrode x1 to the 50th annular electrode x50, the 1st electrode region of the second electrode regions 06 includes the 51st annular electrode to the 100th annular electrode, the 34th electrode region includes the 1701st annular electrode x1701 to the 1750th annular electrode x1750, and the 35th electrode region includes the 1751st annular electrode x1751 to the 1800th annular electrode x1800.

Each electrode region is partitioned as follows:

$$ \mathrm{S} = \sqrt{2f\lambda/QN}, $$

where S is a radius of the electrode region, Q is the number of electrodes per $\lambda$, N is an electrode number, $f$ is a focal length of the variable-focus liquid crystal lens, and $\lambda$ is a wavelength of an incident light. Based on the radius of each electrode region and a pre-designed electrode region partitioning method, the design scheme for the variable-focus liquid crystal lens can be derived.

For example, designing 50 annular electrodes as one electrode region, with $\lambda$ = 543.5 nm, 5 annular electrodes per $\lambda$, and a focal length of the variable-focus liquid crystal lens of 0.8 m, a radius S of the first electrode region 03 is the same as a radius $R_{50}$ of the 50th annular electrode x50 of the first electrode region 03, as shown by:

$$ \mathrm{S} = \mathrm{R}_{50} = \sqrt{2 * 0.8 * 543.5 * 1000/5 * 50} = 2948.9 \ \mu m $$

and thus, the first electrode region 03 is a circular region with a radius of 2948.9 $\mu$m.

V1 and V2 are the voltage of the initial end and the voltage of the terminal end of the entire electrode region.

Finally, it should be noted that the above embodiments are only used to illustrate the technical solutions of this application and are not intended to limit it. Although this application has been described in detail with reference to the foregoing embodiments, those of ordinary skill in the art should understand that they can still modify the technical solutions described in the foregoing embodiments or make equivalent replacements for some or all of the technical features; and these modifications or replacements do not cause the essence of the corresponding technical solutions to depart from the scope of the technical solutions of the embodiments of this application.

## Claims

1. A variable-focus liquid crystal lens, comprising an upper substrate, a lower substrate, and a liquid crystal material, wherein the liquid crystal material is disposed between the upper substrate and the lower substrate;

   the lower substrate internally comprises a first electrode region, wherein the first electrode region comprises a plurality of annular electrodes with unequal spacings and unequal line widths arranged sequentially from the inside to the outside;
   a voltage divider circuit is disposed on the periphery of the lower substrate, wherein the voltage divider circuit comprises connection lines and an annular trace, the annular trace is disposed around the periphery of the lower substrate, the annular trace is separately connected to the plurality of annular electrodes through different connection lines, the connection lines are arranged in a one-to-one correspondence with the annular electrodes, a plurality of spaced connection points are formed at junctions between each of the connection lines and the annular trace, annular trace winding regions are disposed between every two adjacent connection points, distances between every two adjacent connection points are equal, and resistances between every two adjacent connection points are equal; and
   the annular trace comprises an initial end and a terminal end, wherein adjusting a voltage of the initial end and a voltage of the terminal end of the annular trace and controlling the liquid crystal material to operate in a linear region of a voltage-optical path difference curve results in an equally stepped optical path difference distribution.

2. The variable-focus liquid crystal lens according to claim 1, wherein a width m between each of the annular electrodes is calculated as follows:
$m = R_n - R_{n-1}$, wherein $R_n$ is a radius of an n-th annular electrode, $R_{n-1}$ is a radius of an (n-1)-th annular electrode, and n is a natural number greater than or equal to 2;

$$R_n = R_1 \times \sqrt{n};$$

and

$$R_1 = \sqrt{2\lambda f / fs},$$

wherein f is a focal length of the variable-focus liquid crystal lens, $fs$ is the number of annular electrodes contained within an optical path difference per $\lambda$ wavelength, and $\lambda$ is a wavelength of an incident light.

3. The variable-focus liquid crystal lens according to claim 1, wherein the first electrode region comprises a first sub-annular electrode and a second sub-annular electrode, and the voltage divider circuit comprises a first sub-voltage divider circuit and a second sub-voltage divider circuit; wherein

the first sub-voltage divider circuit comprises a first sub-annular trace and first sub-connection lines, and the second sub-voltage divider circuit comprises a second sub-annular trace and second sub-connection lines;
the first sub-annular trace is electrically connected to a plurality of first sub-annular electrodes through different first sub-connection lines, wherein the first sub-connection lines are arranged in a one-to-one correspondence with the first sub-annular electrodes; and
the second sub-annular trace is electrically connected to a plurality of second sub-annular electrodes through different second sub-connection lines, wherein the second sub-connection lines are arranged in a one-to-one correspondence with the second sub-annular electrodes.

4. The variable-focus liquid crystal lens according to claim 3, wherein the first sub-annular trace is disposed on a side close to the first electrode region, and the second sub-annular trace is disposed on a side away from the first electrode region.

5. The variable-focus liquid crystal lens according to claim 4, wherein the connection points comprise first sub-connection points and second sub-connection points; wherein
a plurality of spaced first sub-connection points are formed at junctions between each of the first sub-connection lines and the first sub-annular trace, and a plurality of spaced second sub-connection points are formed at junctions between each of the second sub-connection lines and the second sub-annular trace.

6. The variable-focus liquid crystal lens according to claim 5, wherein the annular trace winding regions comprise first sub-annular trace winding regions and second sub-annular trace winding regions; wherein
the first sub-annular trace winding regions are disposed between every two adjacent first sub-connection points, and the second sub-annular trace winding regions are disposed between every two adjacent second sub-connection points.

7. The variable-focus liquid crystal lens according to claim 3, wherein a plurality of second electrode regions are sequentially disposed from the inside to the outside around the periphery of the first electrode region; wherein
each of the second electrode regions comprises a plurality of the annular electrodes, wherein the quantity of electrodes in every region is equal, an N-th annular electrode in the first electrode region and N-th annular electrodes in the plurality of second electrode regions are all connected to the same connection line, and N is a natural number.

8. The variable-focus liquid crystal lens according to claim 7, wherein the first sub-annular trace and the second sub-annular trace are disposed around the periphery of the plurality of second electrode regions.

9. The variable-focus liquid crystal lens according to claim 7, wherein each of the second electrode regions comprises a third sub-annular electrode and a fourth sub-annular electrode; wherein
the first sub-annular trace is connected to the third sub-annular electrodes of the plurality of second electrode regions through different first sub-connection lines, and the second sub-annular trace is connected to the fourth sub-annular electrodes of the plurality of second electrode regions through different second sub-connection lines.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2024/126308** |

**A. CLASSIFICATION OF SUBJECT MATTER**

G02F1/133(2006.01)i; G02B3/14(2006.01)i

According to International Patent Classification (IPC) or to both national classification and IPC

**B. FIELDS SEARCHED**

Minimum documentation searched (classification system followed by classification symbols)

IPC: G02F G02B

Documentation searched other than minimum documentation to the extent that such documents are included in the fields searched

Electronic data base consulted during the international search (name of data base and, where practicable, search terms used)

CNTXT, VEN, CNABS: 液晶透镜, 电极, 环形, 环状, 连线, 连接线, 走线, 引线, 电阻, liquid crystal lens, electrode?, circle, surround, line, wir+, resistance

**C. DOCUMENTS CONSIDERED TO BE RELEVANT**

| Category* | Citation of document, with indication, where appropriate, of the relevant passages | Relevant to claim No. |
|---|---|---|
| A | CN 116068818 A (NANCHANG VIRTUAL REALITY RESEARCH INSTITUTE CO., LTD.) 05 May 2023 (2023-05-05) description, paragraphs 23-35, and figures 1-6 | 1-9 |
| PX | CN 117539083 A (NANCHANG VIRTUAL REALITY RESEARCH INSTITUTE CO., LTD.) 09 February 2024 (2024-02-09) entire document | 1-9 |
| A | CN 101061419 A (CITIZEN HOLDINGS CO., LTD.) 24 October 2007 (2007-10-24) entire document | 1-9 |
| A | CN 104714351 A (SHANGHAI TIANMA MICROELECTRONICS CO., LTD. et al.) 17 June 2015 (2015-06-17) entire document | 1-9 |
| A | CN 114035250 A (NANCHANG VIRTUAL REALITY RESEARCH INSTITUTE CO., LTD.) 11 February 2022 (2022-02-11) entire document | 1-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 February 2025** | **05 February 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/126308** |

**C.    DOCUMENTS CONSIDERED TO BE RELEVANT**

| Category* | Citation of document, with indication, where appropriate, of the relevant passages | Relevant to claim No. |
|---|---|---|
| A | CN 109856867 A (SHENZHEN JINGHUA LCD TECHNOLOGY CO., LTD.) 07 June 2019 (2019-06-07)<br>entire document | 1-9 |
| A | TW M511620 U (SILICON TOUCH TECHNOLOGY INC.) 01 November 2015 (2015-11-01)<br>entire document | 1-9 |

Form PCT/ISA/210 (second sheet) (July 2022)

## INTERNATIONAL SEARCH REPORT
### Information on patent family members

International application No.

**PCT/CN2024/126308**

| Patent document cited in search report | | | Publication date (day/month/year) | Patent family member(s) | | | Publication date (day/month/year) |
|---|---|---|---|---|---|---|---|
| CN | 116068818 | A | 05 May 2023 | None | | | |
| CN | 117539083 | A | 09 February 2024 | None | | | |
| CN | 101061419 | A | 24 October 2007 | WO | 2006054803 | A1 | 26 May 2006 |
| | | | | JPWO | 2006054803 | A1 | 05 June 2008 |
| | | | | JP | 4950668 | B2 | 13 June 2012 |
| | | | | EP | 1816507 | A1 | 08 August 2007 |
| | | | | EP | 1816507 | A4 | 25 February 2009 |
| | | | | EP | 1816507 | B1 | 05 September 2012 |
| | | | | US | 2008002139 | A1 | 03 January 2008 |
| | | | | US | 7619713 | B2 | 17 November 2009 |
| CN | 104714351 | A | 17 June 2015 | None | | | |
| CN | 114035250 | A | 11 February 2022 | None | | | |
| CN | 109856867 | A | 07 June 2019 | None | | | |
| TW | M511620 | U | 01 November 2015 | None | | | |

Form PCT/ISA/210 (patent family annex) (July 2022)